# EUROPEAN PATENT APPLICATION

(11) **EP 4 790 922 A1**
(43) Date of publication of application: **12.08.2026**
(21) Application number: 25751559.3
(22) Date of filing: 06.02.2025
(51) Int. Cl.: H04B 10/27

(54) **COMMUNICATION METHOD AND APPARATUS, AND PASSIVE OPTICAL NETWORK SYSTEM**

(30) Priority: 08.02.2024 CN 202410178203
(71) Applicant: HUAWEI TECHNOLOGIES CO., LTD., Shenzhen 518129 (CN)
(72) Inventor: WU, Xuming, Shenzhen, Guangdong 518129 (CN)
(74) Representative: Huawei European IPR
(86) International application number: PCT/CN2025/075931
(87) International publication number: WO 2025/167960

(57) **Abstract**

This application provides a communication method and apparatus, and a PON system, to resolve an SN collision problem in a PON, and improve system performance of the PON. The method includes: An OLT device receives a first SN from a first ONU device in a first time window, assigns a first ONU identifier to the first ONU device, and then sends first indication information and the first ONU identifier in a broadcast manner, where the first indication information indicates that the OLT device successfully assigns the first ONU identifier to the first ONU device. Then, the OLT device receives a second SN from a second ONU device in a second time window, where the second SN is the same as the first SN. The OLT device determines, based on an authentication result of the first ONU device, whether to assign a second ONU identifier to the second ONU device.

## Description

This application claims priority to Chinese Patent Application No. 202410178203.3, filed with the China National Intellectual Property Administration on February 8, 2024 and entitled "COMMUNICATION METHOD AND APPARATUS, AND PASSIVE OPTICAL NETWORK SYSTEM", which is incorporated herein by reference in its entirety.

### TECHNICAL FIELD

This application relates to the field of optical access, and more specifically, to a bandwidth adjustment method and apparatus, and a passive optical network system.

### BACKGROUND

As requirements on data traffic rapidly increase, bandwidth needed for service transmission also increases. This poses higher requirements on a capacity and a rate of a transmission network. A previous copper-based access network cannot meet the requirements. In this way, in the 1990s, a passive optical network (passive optical network, PON) technology emerged. This large-capacity and high-speed network access system is continuously innovated and improved during development, and is widely applied after standardization is completed. A PON system includes an optical line terminal (optical line terminal, OLT) device and at least one optical network unit (optical network unit, ONU) device. In a PON, one PON interface of the OLT device can be connected to a plurality of ONU devices. However, not all ONU devices can be randomly connected to the PON interface of the OLT device. Only an ONU device that is authenticated and activated by the OLT device can provide a service for a user. Currently, in an ONU device activation procedure, different ONU devices report same serial numbers (serial number, SN) to the OLT device, and an SN of an online ONU device is sent again by an ONU device that subsequently requests registration. The former causes an upstream collision between two ONU devices, and the latter may cause an ONU that operates normally to go offline. Therefore, how to resolve the foregoing possible collision scenario in an ONU registration and activation procedure is a problem that needs to be resolved.

### SUMMARY

This application provides a communication method and apparatus, and a passive optical network system, to resolve an SN collision problem in a PON, and improve system performance of the PON.

According to a first aspect, an embodiment of this application provides a communication method. The method may be performed by an OLT device, or may be performed by a component (for example, a chip, a chip system, or a circuit) of the OLT device. This is not limited in this application. For ease of description, an example in which the method is performed by the OLT device is used for description below. The method includes: The OLT device receives a first serial number SN from a first optical network unit ONU device in a first time window. The OLT device assigns a first ONU identifier to the first ONU device. The OLT device sends first indication information and the first ONU identifier, where the first indication information indicates that the OLT device successfully assigns the first ONU identifier to the first ONU device. The OLT device receives a second SN from a second ONU device in a second time window, where the second SN is the same as the first SN. The OLT device determines, based on an authentication result of the first ONU device, whether to assign a second ONU identifier to the second ONU device.

According to the foregoing solution, in this application, whether to assign the second ONU identifier to the second ONU device is determined based on the authentication result of the first ONU device, to determine whether to continue a registration and activation procedure of the second ONU device, so that when the OLT device receives a configured SN again, an ONU that operates normally can be prevented from going offline. In this way, system stability is improved and user experience is ensured.

With reference to the first aspect, in some implementations of the first aspect, that the OLT device determines, based on the authentication result of the first ONU device, whether to assign the second ONU identifier to the second ONU device includes: When the OLT device receives the second SN, authentication on the first ONU device is not complete, and the OLT device does not assign the second ONU identifier to the second ONU device, and/or the OLT device does not send indication information that indicates a collision.

With reference to the first aspect, in some implementations of the first aspect, that the OLT device determines, based on the authentication result of the first ONU device, whether to assign the second ONU identifier to the second ONU device includes: When the OLT device receives the second SN, authentication on the first ONU device is complete, and the OLT device determines that the authentication on the first ONU device succeeds; and the OLT device does not assign the second ONU identifier to the second ONU device, and/or the OLT device does not send indication information that indicates a collision.

With reference to the first aspect, in some implementations of the first aspect, that the OLT device determines, based on the authentication result of the first ONU device, whether to assign the second ONU identifier to the second ONU device includes: When the OLT device receives the second SN, authentication on the first ONU device is complete, and the OLT device determines that the authentication on the first ONU device fails; and the OLT device assigns the second ONU identifier to the second ONU device, where the second ONU identifier is different from the first ONU identifier, and the second ONU identifier is used to enable the first ONU device to return to an initial state; and the OLT device sends second indication information and the second ONU identifier, where the second indication information indicates that the OLT device successfully assigns the second ONU identifier to the second ONU device.

With reference to the first aspect, in some implementations of the first aspect, the first indication information and the first ONU identifier are carried in a first assign ONU identifier message.

With reference to the first aspect, in some implementations of the first aspect, the first assign ONU identifier message further includes the first SN, and the first SN indicates that the first assign ONU identifier message is used to assign an ONU identifier to a device corresponding to the first SN.

With reference to the first aspect, in some implementations of the first aspect, the second indication information and the second ONU identifier are carried in a second assign ONU identifier message.

With reference to the first aspect, in some implementations of the first aspect, the second assign ONU identifier message further includes the second SN, and the second SN indicates that the second assign ONU identifier message is used to assign an ONU identifier to a device corresponding to the second SN.

With reference to the first aspect, in some implementations of the first aspect, the OLT device receives, in a third time window, a third SN from a third ONU device and a fourth SN from a fourth ONU device, where the third SN is the same as the fourth SN; and the OLT device sends third indication information, where the third indication information indicates a collision.

According to the foregoing solution, when two ONU devices simultaneously report same SNs to the OLT device, an upstream collision between the ONUs can be avoided by using the third indication information, to improve the system stability and ensure user experience.

With reference to the first aspect, in some implementations of the first aspect, the third indication information is carried in a collision feedback message.

With reference to the first aspect, in some implementations of the first aspect, the collision feedback message further includes the third SN.

With reference to the first aspect, in some implementations of the first aspect, the third indication information specifically indicates an SN collision.

With reference to the first aspect, in some implementations of the first aspect, the method further includes: The OLT sends a first broadcast message and a second broadcast message, where the first broadcast message indicates an inactive ONU device to report a serial number in the first time window, the second broadcast message indicates an inactive ONU device to report a serial number in the second time window, and the first time window and the second time window do not overlap.

According to a second aspect, an embodiment of this application provides a communication method. The method may be performed by an ONU device, or may be performed by a component (for example, a chip, a chip system, or a circuit) of the ONU device. This is not limited in this application. For ease of description, an example in which the method is performed by the ONU device is used for description below. The method includes: A first ONU device sends a first serial number SN to an optical line terminal OLT device in a first time window, where the first SN is the same as a second SN, the second SN is sent by a second ONU device to the OLT device in a second time window, and the second time window is after the first time window. The first ONU device receives first indication information and a first ONU identifier from the OLT device, where the first indication information indicates that the OLT device successfully assigns the first ONU identifier to the first ONU device. When authentication on the first ONU device fails, the first ONU device receives second indication information and a second ONU identifier from the OLT device, where the second indication information indicates that the OLT device successfully assigns the second ONU identifier to the second ONU device, and the second ONU identifier is different from the first ONU identifier. The first ONU device jumps to an initial state based on the second indication information and the second ONU identifier.

According to the foregoing solution, based on the second indication information and the second ONU identifier, the first ONU device that fails to be authenticated may go offline, to ensure system stability.

With reference to the second aspect, in some implementations of the second aspect, the first indication information and the first ONU identifier are carried in a first assign ONU identifier message.

With reference to the second aspect, in some implementations of the second aspect, the first assign ONU identifier message further includes the first SN, and the first SN indicates that the first ONU identifier is an identifier corresponding to the first ONU device.

With reference to the second aspect, in some implementations of the second aspect, the second indication information and the second ONU identifier are carried in a second assign ONU identifier message.

With reference to the second aspect, in some implementations of the second aspect, the second assign ONU identifier message further includes the second SN, and the second SN indicates that the second ONU identifier is an identifier corresponding to the second ONU device.

According to a third aspect, an embodiment of this application provides a communication method. The method may be performed by an ONU device, or may be performed by a component (for example, a chip, a chip system, or a circuit) of the ONU device. This is not limited in this application. For ease of description, an example in which the method is performed by the ONU device is used for description below. The method includes: A first ONU device sends a first serial number SN to an optical line terminal OLT device in a first time window, where the first SN is the same as a second SN, and the second SN is sent by a second ONU device to the OLT device in the first time window. The first ONU device receives indication information from the OLT device, where the indication information indicates a collision.

According to the foregoing solution, when two ONU devices simultaneously report same SNs to the OLT device, an upstream collision between the ONUs can be avoided by using the collision indication information, to improve system stability and ensure user experience.

With reference to the third aspect, in some implementations of the third aspect, that the indication information indicates the collision includes: the indication information indicates an SN collision.

With reference to the third aspect, in some implementations of the third aspect, the indication information is carried in a collision feedback message.

With reference to the third aspect, in some implementations of the third aspect, the collision feedback message further includes an SN, and the SN indicates the SN collision.

According to a fourth aspect, an embodiment of this application provides a communication apparatus. The communication apparatus is configured to perform any one of the first aspect and the implementations of the first aspect. Specifically, the communication apparatus includes a processor, and the processor is configured to invoke and run a computer program, to enable the communication apparatus to perform any one of the first aspect and the implementations of the first aspect. Optionally, the communication apparatus further includes a memory, and the memory is configured to store the computer program.

According to a fifth aspect, an embodiment of this application provides a communication apparatus. The communication apparatus is configured to perform any one of the second aspect and the implementations of the second aspect, or is configured to perform any one of the third aspect and the implementations of the third aspect. Specifically, the communication apparatus includes a processor. The processor is configured to invoke and run a computer program, to enable the communication apparatus to perform any one of the second aspect and the implementations of the second aspect, or to enable the communication apparatus to perform any one of the third aspect and the implementations of the third aspect. Optionally, the communication apparatus further includes a memory, and the memory is configured to store the computer program.

According to a sixth aspect, an embodiment of this application provides a communication apparatus. The communication apparatus is configured to perform the method provided in any one of the first aspect and the implementations of the first aspect. Specifically, the communication apparatus may include a unit and/or a module (for example, a processing unit and a transceiver unit) configured to perform the method provided in any one of the first aspect and the implementations of the first aspect.

In an implementation, the communication apparatus may be an OLT device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a seventh aspect, an embodiment of this application provides a communication apparatus. The communication apparatus is configured to perform the method provided in any one of the second aspect and the implementations of the second aspect, or is configured to perform any one of the third aspect and the implementations of the third aspect. Specifically, the communication apparatus may include a unit and/or a module (for example, a processing unit and a transceiver unit) configured to perform the method provided in any one of the second aspect and the implementations of the second aspect.

In an implementation, the communication apparatus may be an ONU device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to an eighth aspect, an embodiment of this application provides a processor, configured to perform the method provided in at least one of the first aspect, the second aspect, and the third aspect.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a ninth aspect, an embodiment of this application provides a computer program product including instructions. When the computer program product runs on a computer, the computer is enabled to perform the method provided in at least one of the first aspect, the second aspect, and the third aspect, and the implementations of the aspects.

According to a tenth aspect, an embodiment of this application provides a PON system, including the OLT device in the third aspect and the ONU device in the fourth aspect.

According to an eleventh aspect, a chip is provided. The chip includes a processor and a communication interface, and the processor reads instructions through the communication interface, to perform the method provided in at least one of the first aspect, the second aspect, and the third aspect, and the implementations of the aspects.

Optionally, in an implementation, the chip further includes a memory, the memory stores a computer program or instructions, the processor is configured to execute the computer program or the instructions stored in the memory, and when the computer program or the instructions are executed, the processor is configured to perform the method provided in at least one of the first aspect, the second aspect, and the third aspect, and the implementations of the aspects.

According to a twelfth aspect, an embodiment of this application provides a computer-readable storage medium. The computer-readable storage medium stores a computer program. When the computer program is run on a communication apparatus, the communication apparatus is enabled to perform the method provided in at least one of the first aspect, the second aspect, and the third aspect, and the implementations of the aspects.

For technical effects of the fourth aspect to the twelfth aspect, refer to the technical effects of the first aspect to the third aspect. Details are not described herein again.

### BRIEF DESCRIPTION OF DRAWINGS

FIG. 1 is a diagram of an architecture of a PON system to which an embodiment of this application is applicable;
FIG. 2 is a diagram of a current ONU device activation procedure;
FIG. 3 is a diagram of a first communication method 300 according to an embodiment of this application;
FIG. 4 is a diagram of a communication method when authentication on a first ONU device is not complete and when the authentication on the first ONU device is complete according to an embodiment of this application;
FIG. 5 is a diagram of a second communication method 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a diagram of a structure of a communication apparatus 800 according to an embodiment of this application; and
FIG. 9 is a diagram of a chip system 900 according to an embodiment of this application.

### DESCRIPTION OF EMBODIMENTS

The following describes technical solutions of this application with reference to accompanying drawings.

For ease of understanding of embodiments of this application, the following descriptions are provided.
1. In the following text descriptions or accompanying drawings in embodiments of this application, terms such as "first", "second", and various numbers are merely used for differentiation for ease of description, and are not used to limit the scope of embodiments of this application. For example, different indication information is distinguished, and different ONU devices are distinguished.
2. In the following embodiments of this application, terms such as "include", "have", and any other variants are intended to cover the non-exclusive inclusion. For example, a system, product, or device that includes a series of units is not necessarily limited to those units expressly listed, but may include other units not expressly listed or inherent to these products or devices.
3. In embodiments of this application, terms such as "example" or "for example" indicate examples, illustrations, or descriptions. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.
4. In this application, "indication" may include a direct indication, an indirect indication, an explicit indication, and an implicit indication. When a piece of indication information is described for indicating A, it may be understood as that the indication information carries A, directly indicates A, or indirectly indicates A.
5. In this application, "sending" and "receiving" indicate signal transmission directions. For example, "receiving information from YY" may be understood as that a source end of the information is YY, and may include directly receiving the information from YY through an air interface, or may include indirectly receiving the information from YY via another unit or module through the air interface. "Sending" may alternatively be understood as "outputting" of a chip interface, and "receiving" may alternatively be understood as "inputting" of the chip interface. In other words, sending and receiving may be performed between devices, for example, between an OLT device and an ONU device, or may be performed in a device, for example, sending or receiving is performed between components, modules, chips, software modules, or hardware modules in the device through a bus, a cable, or an interface.
6. In embodiments of this application, "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, and c may indicate a, b, c, a and b, a and c, b and c, or a, b, and c, where a, b, and c may be singular or plural.
7. In embodiments of this application, unless otherwise stated or there is a logic collision, terms and/or descriptions in different embodiments are consistent and may be mutually referenced, and technical features in different embodiments may be combined based on an internal logical relationship thereof, to form a new embodiment.

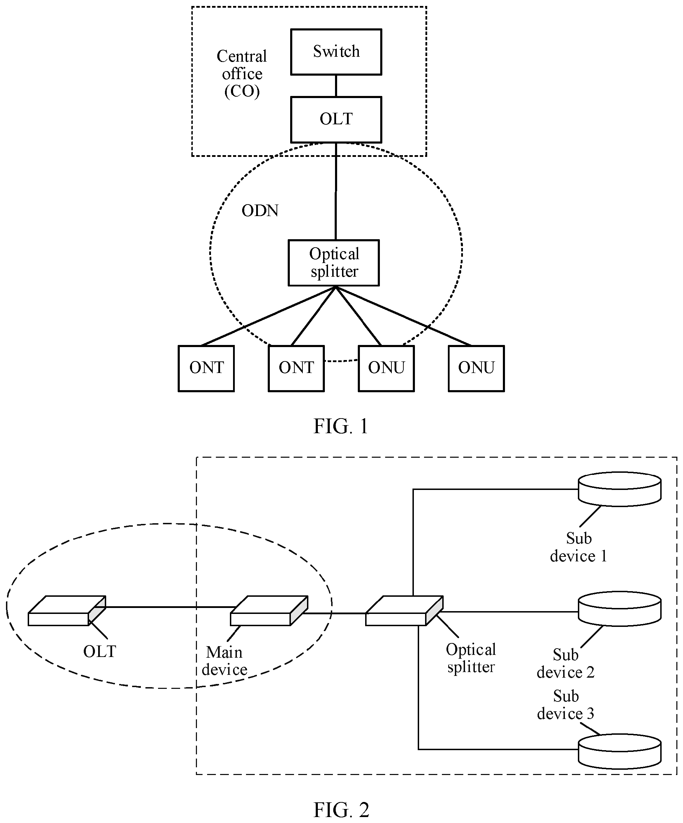

FIG. 1 is a diagram of an architecture of a first PON system to which an embodiment of this application is applicable. A PON technology is a point-to-multipoint fiber access technology. The PON system includes a main device, an optical distribution network (optical distribution network, ODN) device, and at least one sub device. Specifically, the main device may be an OLT device, or a main FTTR unit (Main FTTR Unit, MFU) in a fiber to the room (fiber to the room, FTTR) system, and the sub device may be an ONU, an optical network termination (optical network termination, ONT), or a sub FTTR unit (Sub FTTR Unit, SFU) in the FTTR system. The OLT device is connected to the ODN device, and the ODN device is connected to a plurality of ONU devices. The OLT device provides a network-side interface. The OLT device is connected to an upper-layer network-side device (for example, a switch or a router) and one or more lower-layer ODN devices. Generally, the OLT device is usually located in a central office (central office, CO), and the ONU device is located at or near a user's home. The ONU device provides a user-side interface, and is connected to the ODN device. If the ONU also provides a user interface function, for example, provides an Ethernet user interface or a plain old telephone service (plain old telephone service, POTS) user interface, the ONU is referred to as an optical network termination (optical network termination, ONT). The ODN device includes a passive optical splitter used for optical power distribution, a feeder fiber connected between the passive optical splitter and the OLT device, and a drop fiber connected between the passive optical splitter and the ONU device. During downstream data transmission, the ODN device transmits downstream data of the OLT device to each ONU device through the optical splitter. During upstream data transmission, the ODN device combines a plurality of channels of upstream data from the plurality of ONU devices into one channel of optical signals through time division multiplexing (time division multiplexing, TDM). A principle is as follows: Upstream transmission duration is divided into several timeslots Ti (i=1, 2, 3, ..., 32, ...). In each timeslot, only one ONU device is arranged to send data to the OLT in a packetized manner, and the ONU devices successively send data in a sequence specified by the OLT device. In the TDM, the OLT device needs to perform strict sending timing on each ONU device after measuring a distance between the OLT device and each ONU device. Each ONU device obtains timing information from a downstream signal sent by the OLT device, and sends upstream packet data in a timeslot specified by the OLT device, to avoid a collision between the ONU devices.

It may be understood that FIG. 1 is only a diagram. The PON system may further include another device, for example, may further include a wavelength division device, more ONU devices, and the like, which are not shown in FIG. 1.

FIG. 2 is a diagram of an architecture of a second PON system to which an embodiment of this application is applicable. The foregoing FIG. 1 may be considered as a fiber to the home (fiber to the home, FTTH) architecture. Based on the FTTH, to resolve a problem of Wi-Fi coverage in a home network, an optical fiber may further be extended to a household room. An optical terminal device that provides Wi-Fi access is installed in the room. In this way, a distance between a user terminal and a Wi-Fi access point is shortened, and signal quality is improved. This application scenario is referred to as FTTR. An FTTR network and an FTTH network may be considered as concatenated PON systems. In FTTH, an OLT is deployed in a central office, and an ONU is deployed in an information box of a home. A main device in the FTTR may be deployed in the information box of the home in place of the ONU in the FTTH. The main device in an FTTR scenario has a function similar to that of the OLT in an FTTH scenario, and the main device may also have a function similar to that of the ONU in the FTTH scenario. In other words, the main device in the FTTR is a device that has functions of both the OLT and the ONU, and may be used as a network device that serves as a connecting device between the FTTH and the FTTR. A sub device in the FTTR may be deployed in each room of the home, and is configured to connect to a user terminal. The sub device and the ONU in the FTTH are essentially similar network devices.

To better understand the technical solutions of this application, technologies related to an ONU device activation mechanism in the technical solutions of this application are briefly described.

An activation process of the ONU includes three steps: parameter learning (parameter learning), serial number acquisition (serial number acquisition), and ranging (ranging). Specifically, in the parameter learning step, the ONU device remains passive, and obtains an operational parameter used for upstream transmission. In the serial number acquisition step, the OLT device discovers a new ONU device based on a serial number of the new ONU device, and then assigns an ONU ID to the new ONU device. In the ranging step, after receiving a ranging response message of the ONU device, the OLT device obtains a round trip delay (round trip delay, RTD) of the ONU device through calculation based on sending time of a ranging request message and arrival time of the ranging response message, obtains an equalization delay (equalization delay, EQD) of the ONU through calculation based on the sending time of the ranging request message, the arrival time of the ranging response message, response processing time of the ONU, and a system reference equalization delay, and sends the EQD to the ONU. The ONU device has seven states in an entire activation process: an initial state (Initial state), which is also referred to as an O1 state; a standby state (Standby state), which is also referred to as an O2 state; a serial number state (Serial_Number state), which is also referred to as an O3 state; a ranging state (Ranging state), which is also referred to as an O4 state; an operation state (Operation state), which is also referred to as an O5 state; a popup state (POPUP state), which is also referred to as an O6 state; and an emergency stop state (Emergency Stop state), which is also referred to as an O7 state.

Currently, an inactive ONU device in the O3 state sends an SN to the OLT device in a time window (Time window) set by the OLT device. However, in some scenarios, a plurality of different ONU devices may simultaneously send same SNs to the OLT to request registration. In addition, the OLT device receives an SN that is the same as an SN of an online ONU again. These scenarios may cause an ONU that operates normally to go offline or may cause an upstream collision between ONUs.

In view of this, this application provides a communication method, which may be applied to an ONU device activation procedure, to resolve a collision scenario in the activation procedure. In this way, stability of a PON is improved, and performance of the PON is improved.

Methods provided in embodiments of this application are described below in detail with reference to the accompanying drawings. Embodiments provided in this application may be applied to the PON shown in FIG. 1. This is not limited.

In the following embodiments, an OLT device and an ONU device are used as examples for description. The OLT device may be replaced with a component (for example, a chip or a circuit) of the OLT device, and the ONU device may be replaced with a component (for example, a chip or a circuit) of the ONU device.

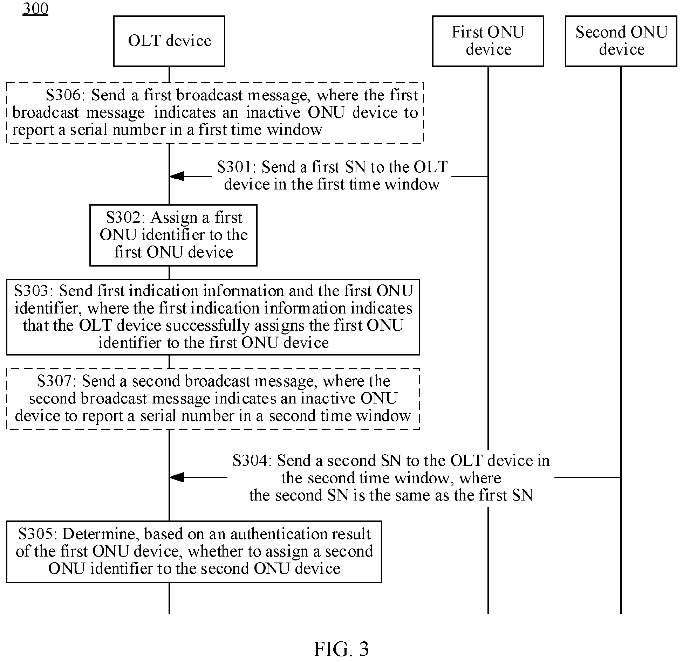

FIG. 3 is a diagram of a first communication method 300 according to an embodiment of this application. FIG. 3 shows a schematic flowchart of information exchange between an OLT device, and a first ONU device and a second ONU device. The method 300 shown in FIG. 3 may include the following plurality of steps.

S301: The first ONU device sends a first SN to the OLT device in a first time window.

It should be noted that the first time window is a first time period that is configured by the OLT device and that is used by an inactive ONU device to send an SN. In addition, a message that carries the first SN is not limited in this application. Optionally, the first SN is carried in an ONU serial number (Serial_Number_ONU) physical layer (physical layer) operations, administration and maintenance (operations, administration and maintenance, OAM) message sent by the first ONU device.

S302: The OLT device assigns a first ONU identifier to the first ONU device.

Specifically, after the OLT device receives the first SN from the first ONU device, the OLT device determines that the first SN is a new SN, in other words, the first SN has no associated ONU ID, or the OLT device assigns no ONU ID to an ONU device corresponding to the first SN. In this case, the OLT device assigns the first ONU identifier to the first ONU device, and corresponds the first SN to the first ONU identifier simultaneously.

S303: The OLT device sends first indication information and the first ONU identifier, where the first indication information indicates that the OLT device successfully assigns the first ONU identifier to the first ONU device.

Specifically, after assigning the first ONU identifier to the first ONU device, the OLT device sends the first ONU identifier and the first indication information by using a first message. The first message further includes the first SN, and the first SN carried in the first message indicates that the first message is used to assign an ONU identifier to a device corresponding to the first SN. It should be noted that the first message that carries the first ONU identifier and the first indication information is not limited in this application. Optionally, the first message that carries the first ONU identifier and the first indication information is an assign ONU ID (Assign ONU_ID) message. For example, when the first message is a first Assign ONU_ID message, the first Assign ONU_ID message carries the first indication information, the first ONU identifier, and the first SN. Therefore, based on the first SN, the first ONU device may receive the first Assign ONU_ID message and obtain the corresponding first ONU identifier.

S304: The OLT device receives a second SN from the second ONU device in a second time window, where the second SN is the same as the first SN.

Specifically, the second time window is a second time period that is configured by the OLT device and that is used by an inactive ONU device to send an SN. Optionally, the second SN is carried in a Serial_Number_ONU PLOAM message sent by the second ONU device. It should be noted that the second time window and the first time window do not overlap, and the second time window is after the first time window.

S305: The OLT device determines, based on an authentication result of the first ONU device, whether to assign a second ONU identifier to the second ONU device.

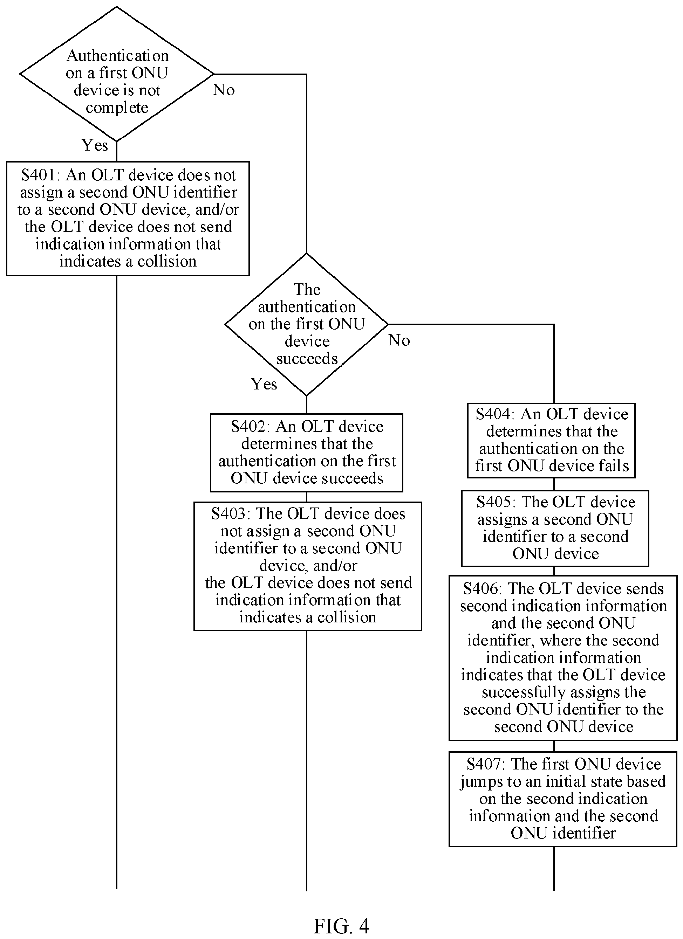

It may be understood that, after the first ONU device receives the first ONU identifier and the first indication information that are sent by the OLT device, the first ONU device continues an activation procedure. When the OLT device receives the second SN from the second ONU device, there may be two scenarios for the first ONU device. In a first scenario, authentication on the first ONU device is not complete. Alternatively, in a second scenario, authentication on the first ONU device is complete. Therefore, the foregoing two scenarios are specifically described with reference to FIG. 4.

As shown in FIG. 4, if the authentication on the first ONU device is not complete when the OLT device receives the second SN from the second ONU device, the OLT device performs S401.

S401: The OLT device does not assign the second ONU identifier to the second ONU device, and/or the OLT device does not send indication information that indicates a collision.

Specifically, when the authentication on the first ONU device is not complete, the OLT device cannot determine whether the first ONU device is authorized and whether the first ONU device can be registered and activated. Therefore, the OLT device continues to wait for the authentication result of the first ONU device. In this case, the OLT device does not assign the second ONU identifier to the second ONU device, the OLT device does not send the indication information that indicates the collision, or the OLT device neither assigns the second ONU identifier to the second ONU device nor sends the indication information that indicates the collision.

If the authentication on the first ONU device is complete when the OLT device receives the second SN, the OLT device exchanges different information with the first ONU device and the second ONU device based on the authentication result of the first ONU device. The following provides detailed descriptions separately based on successful authentication on the first ONU device and failed authentication on the first ONU device.

In some embodiments, when the authentication on the first ONU device succeeds, the OLT device performs the following S402 and S403.

S402: The OLT device determines that the authentication on the first ONU device succeeds.

Specifically, after the OLT device completes ranging on the first ONU device to enable the first ONU device to enter an O5 state, it indicates that the authentication on the first ONU device succeeds.

S403: The OLT device does not assign the second ONU identifier to the second ONU device, and/or the OLT device does not send indication information that indicates a collision.

Specifically, after the OLT device determines that the authentication on the first ONU device succeeds, the OLT device corresponds the first SN to the first ONU identifier, considers that the second ONU device is unauthorized, and rejects registration of the second ONU device. In this case, the OLT device does not assign the second ONU identifier to the second ONU device, the OLT device does not send the indication information that indicates the collision, or the OLT device neither assigns the second ONU identifier to the second ONU device nor sends the indication information that indicates the collision.

In some other embodiments, when the authentication on the first ONU device fails, the OLT device and the first ONU device perform the following S404 to S407.

S404: The OLT device determines that the authentication on the first ONU device fails.

It should be noted that a method for performing authentication on the first ONU device by the OLT device is not limited in this application. Specifically, for a specific process of determining whether authentication on an ONU by the OLT device succeeds or fails, refer to a related technology. Details are not described herein again.

S405: The OLT device assigns the second ONU identifier to the second ONU device.

Specifically, after the OLT device determines that the authentication on the first ONU device fails, the OLT device considers that the first ONU device is not an authorized ONU device. In this case, the OLT device assigns the second ONU identifier to the second ONU device. It should be noted that the second ONU identifier is different from the first ONU identifier, and the second ONU identifier is used to enable the first ONU device to return to an initial state (namely, an O1 state).

S406: The OLT device sends second indication information and the second ONU identifier, where the second indication information indicates that the OLT device successfully assigns the second ONU identifier to the second ONU device.

S407: The first ONU device jumps to the initial state based on the second indication information and the second ONU identifier.

Specifically, the second indication information and the second ONU identifier are carried in a second message, the second message further includes the second SN, and the second SN carried in the second message indicates that the second message is used to assign an ONU identifier to a device corresponding to the second SN. Because the second SN is the same as the first SN, the first ONU device may receive the second message. Based on the second SN, after the first ONU device receives the second message and parses the second message, the first ONU device obtains the second ONU identifier, and determines that the second ONU identifier is different from the first ONU identifier. In this case, the first ONU device jumps from a current state to the initial state O1 state.

It should be noted that, in this application, that the authentication on the ONU device succeeds may also be understood as that an identity of the ONU device is authorized, in other words, the ONU device may access a PON interface of the OLT device, and can be managed by the OLT device, to implement upstream and downstream data transmission with the OLT device. Correspondingly, that the authentication on the ONU device fails may also be understood as that an identity of the ONU device is unauthorized, in other words, the ONU device cannot or is not allowed to access a PON interface of the OLT device, and the OLT device does not manage the ONU device.

It should be further noted that the method shown in FIG. 3 is described by using two ONU devices as an example. When there are more ONU devices in a PON, for example, when a third ONU device sends an SN that is the same as the first SN or the second SN in a third time window, for an interaction procedure between the OLT device and the third ONU device, refer to the descriptions of FIG. 4. In other words, the interaction procedure between the OLT device and the third ONU device is similar to the interaction procedure between the OLT device and the second ONU device. For example, when the OLT device receives the same SN sent by the third ONU device and waits for an authentication result of the first ONU device, the OLT device does not send indication information that indicates a collision, and/or does not assign identifiers to the second ONU device and the third ONU device. For example, when the authentication on the first ONU device fails (that is, the authentication fails), the OLT device waits for an authentication result of the second ONU device. If authentication on the second ONU device succeeds, the OLT device does not send indication information that indicates a collision, and/or does not assign an identifier to the third ONU device. If authentication on the second ONU device fails, the OLT device assigns a third identifier to the third ONU device. In this case, the second ONU device jumps to a state based on the third identifier. Details are not described herein again.

In some embodiments, before the first ONU device sends the first SN to the OLT device and the second ONU device sends the second SN to the OLT device, the method 300 further includes the following steps.

S306: The OLT device sends a first broadcast message, where the first broadcast message indicates an inactive ONU device to report a serial number in the first time window.

Specifically, the OLT device broadcasts the first broadcast message in a downstream direction, where the first broadcast message carries the first time window, so that the first ONU device sends the first SN in the first time window based on the first broadcast message after receiving the first broadcast message. The first broadcast message is not limited in this application. Optionally, the first broadcast message is a serial number request (SN_Request) message. After receiving the first SN_Request message, the first ONU generates random delay time, and after the random delay time times out, returns the first SN to the OLT device by using a first Serial_Number_ONU PLOAM message.

S307: The OLT device sends a second broadcast message, where the second broadcast message indicates an inactive ONU device to report a serial number in the second time window.

Specifically, the OLT device broadcasts the second broadcast message in the downstream direction, where the second broadcast message carries the second time window, so that the second ONU device sends the second SN in the second time window based on the second broadcast message after receiving the second broadcast message. Optionally, the second broadcast message is an SN_Request message. After receiving the second SN_Request message, the second ONU generates random delay time, and after the random delay time times out, returns the second SN to the OLT device by using a second Serial_Number_ONU PLOAM message.

According to the foregoing solution, in this application, whether to assign the second ONU identifier to the second ONU device is determined based on the authentication result of the first ONU device, to determine whether to continue a registration and activation procedure of the second ONU device, so that when the OLT device receives a configured SN again, an ONU that operates normally can be prevented from going offline. In this way, system stability is improved and user experience is ensured.

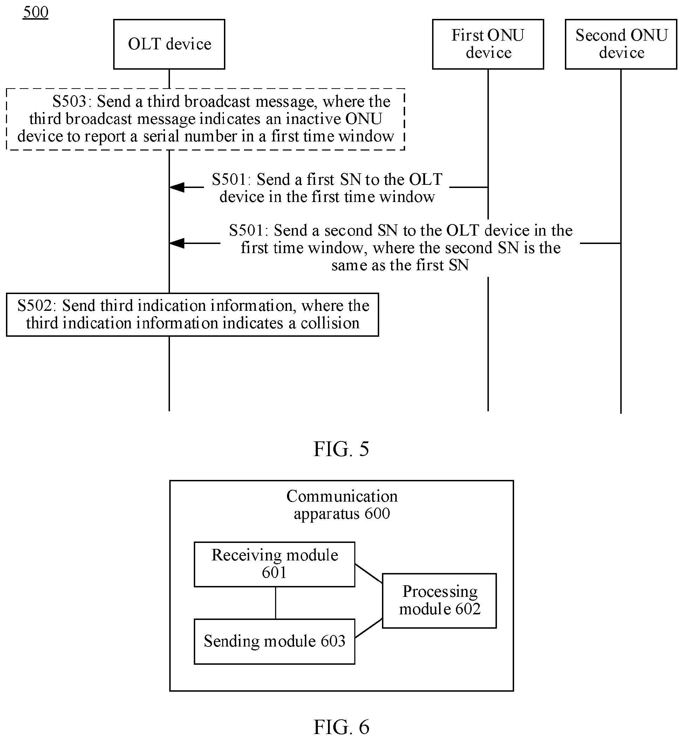

FIG. 5 is a diagram of a second communication method 500 according to an embodiment of this application. FIG. 5 shows a schematic flowchart of information exchange between an OLT device, and a first ONU device and a second ONU device. The method 500 shown in FIG. 5 may include the following plurality of steps.

S501: The first ONU device sends a first SN to the OLT device in a first time window, and the second ONU device sends a second SN to the OLT device in the first time window, where the first SN is the same as the second SN.

Similarly, a message that carries the first SN and a message that carries the second SN are not limited in this application. Optionally, the first SN is carried in a Serial_Number_ONU PLOAM message sent by the first ONU device, and the second SN is carried in a Serial_Number_ONU PLOAM message sent by the second ONU device.

S502: The OLT device sends third indication information, where the third indication information indicates a collision.

Specifically, after the OLT device simultaneously receives, in the first time window, the same SNs sent by the first ONU device and the second ONU device, the OLT device considers that the first ONU device collides with the second ONU device. In this case, the OLT device does not assign ONU identifiers to the first ONU device and the second ONU device, but sends the third indication information that indicates the collision.

It should be noted that a message that carries the third indication information is not limited in this application. Optionally, the third indication information is carried in a collision feedback (Collision feedback) message. It may be understood that, when the third indication information is carried in the collision feedback message, the collision feedback message includes an indication field of the third indication information, and the indication field may include a plurality of bits. For example, if the indication field occupies two bits, 00 indicates that evaluation cannot be performed, 01 indicates that there is no upstream signal, 10 indicates successful assignment, and 11 indicates a collision. Optionally, the third indication information specifically indicates an SN collision. In this case, in the plurality of bits included in the indication field that carries the third indication information, a value of a specific fixed bit may be set to indicate that the collision is an SN collision. The specific fixed bit may be a most significant bit, a least significant bit, or the like. This is not limited in this application. For example, if the indication field occupies three bits, when the most significant bit indicates that the collision is an SN collision, for example, the most significant bit being 1 indicates that the collision is an SN collision, and the most significant bit being 0 indicates that the collision is not an SN collision, and remaining two bits indicate different cases, for example, 111 indicates an SN collision, and 011 indicates a collision but not an SN collision.

It may be understood that the message that carries the third indication information further includes the first SN, so that the first ONU device and the second ONU device may receive, based on the first SN, the message that carries the third indication information. In this case, it is determined that an upstream collision occurs at this time.

In some embodiments, before the first ONU device and the second ONU device send the first SN to the OLT device, the method 500 further includes the following step.

S503: The OLT device sends a third broadcast message, where the third broadcast message indicates an inactive ONU device to report a serial number in the first time window.

Specifically, the OLT device sends the third broadcast message in a downstream direction, where the third broadcast message carries the first time window, so that the first ONU device and the second ONU device send the SN in the first time window based on the third broadcast message after receiving the third broadcast message. The third broadcast message is not limited in this application. Optionally, the third broadcast message is an SN_Request message.

It should be noted that, after the first ONU device and the second ONU device receive the third indication information, the first ONU device and the second ONU device separately generate random delay time. After random delay time of the first ONU device and random delay time of the second ONU device expire, the first ONU device and the second ONU device may request a registration and activation procedure from the OLT device again. Because the random delay time of the first ONU device is different from that of the second ONU device, a probability that the first ONU device and the second ONU device simultaneously report same SNs to the OLT next time is greatly reduced. Therefore, an upstream collision of ONUs can be avoided, thereby improving system stability and ensuring user experience.

For the embodiments in FIG. 3 to FIG. 5, it should be noted that:
(1) The step numbers of each flowchart described in embodiments are merely a procedure execution example, and do not constitute a limitation on a step execution sequence. In embodiments of this application, there is no strict execution sequence between steps having no time sequence dependence relationship with each other. In addition, not all steps shown in each flowchart are necessarily performed steps, and some steps may be added or deleted for each flowchart based on an actual requirement.
(2) In embodiments of this application, unless otherwise stated or there is a logic collision, terms and/or descriptions in different embodiments are consistent and may be mutually referenced, and technical features in different embodiments may be combined based on an internal logical relationship thereof, to form a new embodiment. The embodiments in FIG. 3 to FIG. 5 may be implemented independently, or may be combined with each other. For example, the embodiment shown in FIG. 3 and the embodiment shown in FIG. 5 are combined with each other. When the OLT device first receives the first SN in the first time window, and receives the second SN in the second time window, a combination of the embodiment shown in FIG. 3 and the embodiment shown in FIG. 5 may be as follows: The OLT device receives, in the third time window, same SNs sent by the third ONU device and a fourth ONU device, and performs the steps included in the method 500. Alternatively, when the OLT device receives, in the first time window, the first SN and the second SN that are the same and that are sent by the first ONU device and the second ONU device, a combination of the embodiment shown in FIG. 3 and the embodiment shown in FIG. 5 may be that the OLT device receives a third SN from the third ONU device in the second time window, and the OLT device receives, in a fourth time window, a fourth SN that is the same as the third SN and that is sent by the fourth ONU device, and performs steps included in the method 300.
(3) In the foregoing embodiments, some messages and parameters in a PON system are used in the descriptions. However, during specific implementation, different messages or message names may be used. This is not limited in embodiments of this application. In addition, in some of the foregoing embodiments, a device (the OLT device or the ONU device) in an existing PON architecture is mainly used as an example for description. It should be understood that, a specific form of the device is not limited in embodiments of this application. For example, all devices that can implement a same function in the future are applicable to embodiments of this application.
(4) In the foregoing method embodiments, a method and an operation implemented by a device (for example, an OLT device or an ONU device) may alternatively be implemented by a component (for example, a chip or a circuit) of the device. This is not limited.

The methods provided in embodiments of this application are described above in detail with reference to FIG. 3 to FIG. 5. Apparatuses and a chip system provided in embodiments of this application are described below in detail with reference to FIG. 6 to FIG. 9. It should be understood that descriptions of apparatus embodiments correspond to the descriptions of the method embodiments. Therefore, for content not described in detail, refer to the foregoing method embodiments. For brevity, details are not described herein again.

The communication methods in FIG. 3 to FIG. 5 are mainly described from a perspective of interaction between the OLT device and the ONU device. It may be understood that, to implement the foregoing functions, the OLT device and the ONU device include corresponding hardware structures and/or software modules for performing the functions.

It may be understood that, to implement the functions in the foregoing embodiments, the OLT device and the ONU device include the corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 6 is a block diagram of a communication apparatus 600 according to an embodiment of this application. For example, the apparatus is the OLT device shown in FIG. 1, or may be a module (for example, a chip) used in the OLT device. Specifically, the communication apparatus 600 includes a receiving module 601. The receiving module 601 may be configured to implement a corresponding receiving function. The receiving module 601 may also be referred to as a receiving unit. The communication apparatus 600 further includes a processing module 602. The processing module 602 may be configured to implement a corresponding processing function. The communication apparatus 600 further includes a sending module 603. The sending module 603 may be configured to implement a corresponding sending function. The sending module 603 may also be referred to as a sending unit. The receiving module 601 and the sending module 603 may also be referred to as a communication interface or a communication unit.

Optionally, the communication apparatus 600 further includes a storage unit. The storage unit may be configured to store instructions and/or data. The processing module 602 may read the instructions and/or the data in the storage unit, so that the communication apparatus 600 implements actions of the OLT device in the foregoing method embodiments.

The communication apparatus 600 may be configured to perform actions performed by the OLT device in the foregoing method embodiment 300 to method embodiment 500. In this case, the communication apparatus 600 may be a component of the OLT device. The receiving module 601 is configured to perform receiving-related operations of the OLT device in the foregoing method embodiments. The processing module 602 is configured to perform processing-related operations of the OLT device in the foregoing method embodiment 300 to method embodiment 500. The sending module 603 is configured to perform sending-related operations of the OLT device in the foregoing method embodiment 300 to method embodiment 500.

In an embodiment, the communication apparatus 600 may be configured to perform operations of the OLT device in FIG. 3 to FIG. 5. Examples are provided.

The receiving module 601 is configured to: receive a first SN from a first ONU device in a first time window, and receive a second SN from a second ONU device in a second time window, where the second SN is the same as the first SN.

The processing module 602 is configured to: assign a first ONU identifier to the first ONU device, and determine, based on an authentication result of the first ONU device, whether to assign a second ONU identifier to the second ONU device.

The sending module 603 is configured to send first indication information and the first ONU identifier, where the first indication information indicates that the OLT device successfully assigns the first ONU identifier to the first ONU device.

It should be understood that a specific process in which the modules perform the foregoing corresponding steps is described in detail in the foregoing method embodiments. For brevity, details are not described herein again.

In addition, the receiving module 601, the processing module 602, and the sending module 603 in the communication apparatus 600 may further implement other operations or functions of the OLT device in the foregoing methods. Details are not described herein again.

Optionally, the communication apparatus 600 may be a device including an OLT device, or a component configured in the OLT device, for example, a chip of the OLT device. In this case, the receiving module 601 and the sending module 603 may be an interface circuit, a pin, or the like. Specifically, the interface circuit may include an input circuit and an output circuit. The receiving module 601 may include an input circuit, the sending module 603 may include an output circuit, and the processing module 602 may include a processing circuit.

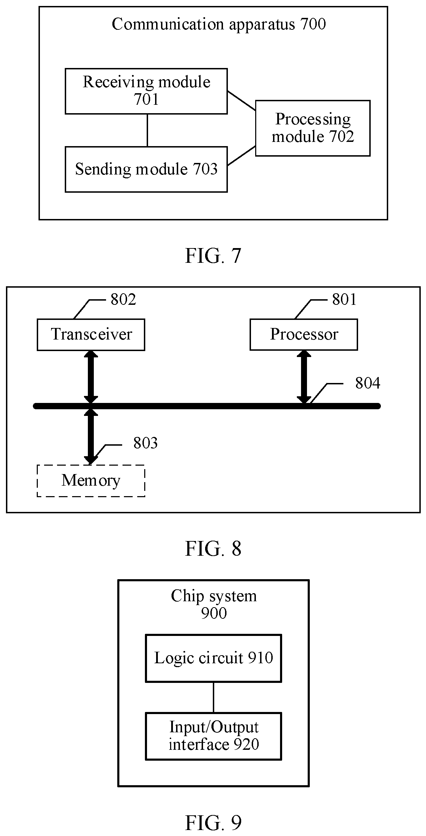

FIG. 7 is a block diagram of a communication apparatus 700 according to an embodiment of this application. For example, the apparatus is one of the ONU devices shown in FIG. 1, or may be a module (for example, a chip) used in the ONU device. Specifically, the communication apparatus 700 includes a receiving module 701. The receiving module 701 may be configured to implement a corresponding receiving function. The receiving module 701 may also be referred to as a receiving unit. The communication apparatus 700 further includes a processing module 702. The processing module 702 may be configured to implement a corresponding processing function. The communication apparatus 700 further includes a sending module 703. The sending module 703 may be configured to implement a corresponding sending function. The sending module 703 may also be referred to as a sending unit. The receiving module 701 and the sending module 703 may also be referred to as a communication interface or a communication unit.

Optionally, the communication apparatus 700 further includes a storage unit. The storage unit may be configured to store instructions and/or data. The processing module 702 may read the instructions and/or the data in the storage unit, so that the communication apparatus 700 implements actions of the ONU device in the foregoing method embodiments.

The communication apparatus 700 may be configured to perform actions performed by the ONU device in the foregoing method embodiment 300 to method embodiment 500. In this case, the communication apparatus 700 may be a component of the ONU device. The receiving module 701 is configured to perform receiving-related operations of the ONU device in the foregoing method embodiments. The processing module 702 is configured to perform processing-related operations of the ONU device in the foregoing method embodiment 300 to method embodiment 500. The sending module 703 is configured to perform sending-related operations of the ONU device in the foregoing method embodiment 300 to method embodiment 500.

In an embodiment, the communication apparatus 700 may be configured to perform operations of the ONU device in FIG. 3 to FIG. 5. Examples are provided.

The receiving module 701 is configured to: receive first indication information and a first ONU identifier from an OLT device, where the first indication information indicates that the OLT device successfully assigns the first ONU identifier to a first ONU device; and receive second indication information and a second ONU identifier from the OLT device, where the second indication information indicates that the OLT device successfully assigns the second ONU identifier to a second ONU device, and the second ONU identifier is different from the first ONU identifier.

The processing module 702 jumps to an initial state based on the second indication information and the second ONU identifier.
the sending module 703 is configured to send a first serial number SN to the OLT device in a first time window, where the first SN is the same as a second SN, the second SN is sent by the second ONU device to the OLT device in a second time window, and the second time window is after the first time window.

It should be understood that a specific process in which the modules perform the foregoing corresponding steps is described in detail in the foregoing method embodiments. For brevity, details are not described herein again.

In addition, the receiving module 701, the processing module 702, and the sending module 703 in the communication apparatus 700 may further implement other operations or functions of the ONU device in the foregoing methods. Details are not described herein again.

Optionally, the communication apparatus 700 may be a device including an ONU device, or a component configured in the ONU device, for example, a chip of the ONU device. In this case, the receiving module 701 and the sending module 703 may be an interface circuit, a pin, or the like. Specifically, the interface circuit may include an input circuit and an output circuit. The receiving module 701 may include an input circuit, the sending module 703 may include an output circuit, and the processing module 702 may include a processing circuit.

FIG. 8 is a diagram of a structure of a communication apparatus 800 according to an embodiment of this application. The communication apparatus 800 includes a processor 801 and a transceiver 802. The transceiver 802 is configured to perform information exchange via a transmission medium. Optionally, the transceiver 802 may be an interface, a bus, a circuit, or an apparatus that can implement sending and receiving functions. Optionally, a component that is in the transceiver 802 and that is configured to implement a receiving function may be considered as a receiving module, and a component that is in the transceiver 802 and that is configured to implement a sending function may be considered as a sending module. That is, the transceiver 802 includes a receiver and a transmitter.

The transceiver 802 may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitter, a transmitting module, a transmitting circuit, or the like.

For example, in an embodiment, the processor 801 is configured to perform other operations or functions of a chip of an OLT device. The transceiver 802 is configured to exchange information between the communication apparatus 800 and an ONU device.

In another embodiment, the processor 801 is configured to perform other operations or functions of a chip of an ONU device. The transceiver 802 is configured to exchange information between the communication apparatus 800 and an OLT device.

The communication apparatus 800 may further include a memory 803, configured to store a computer program or instructions and/or data. The memory 803 is coupled to the processor 801. The processor 801 is configured to execute the computer program or the instructions and/or the data stored in the memory 803, so that one of the method 300 to the method 500 in the foregoing method embodiments is performed. A coupling in this embodiment of this application is an indirect coupling or a communication connection between apparatuses, units, or modules, may be in electrical, mechanical, or other forms, and is used for information exchange between the apparatuses, the units, or the modules. The processor 801 and the memory 803 may operate cooperatively.

Optionally, the communication apparatus 800 may include one or more processors 801, and one or more memories 803.

Optionally, the memory 803 and the processor 801 are integrated together, or disposed separately.

In this embodiment of this application, a specific connection medium between the processor 801, the transceiver 802, and the memory 803 is not limited. In this embodiment of this application, the processor 801, the transceiver 802, and the memory 803 are connected through a bus 804 in FIG. 8. The bus is represented by a bold line in FIG. 8. A connection manner between other components is merely an example for description, and imposes no limitation. The bus may be classified into an address bus, a data bus, a control bus, and the like.

It should be understood that, for ease of representation, only one bold line represents the bus in FIG. 8, but this does not mean that there is only one bus or only one type of bus.

FIG. 9 is a diagram of a chip system 900 according to an embodiment of this application. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information into the chip system 900 for processing.

Optionally, the logic circuit 910 may be implemented by one or more processors, including the one or more processors or a processing part of the one or more processors.

Optionally, the input/output interface 920 may include a transceiver circuit, a transceiver, an input/output circuit, or a communication interface.

In a solution, the chip system 900 is configured to implement operations performed by the OLT device or the ONU device in the foregoing method embodiments.

Specifically, the logic circuit 910 is configured to implement processing-related operations performed by the OLT device or the ONU device in the foregoing method embodiments. The input/output interface 920 is configured to implement sending and/or receiving-related operations performed by the OLT device or the ONU device in the foregoing method embodiments.

An embodiment of this application further provides a computer-readable storage medium, storing computer instructions used to implement the method performed by the OLT device or the ONU device in the foregoing method embodiments.

For example, when a computer program is executed by a computer, the computer is enabled to implement the method performed by the OLT device or the ONU device in the foregoing method embodiments.

An embodiment of this application further provides a computer program product, including instructions. When the instructions are executed by a computer, the method performed by the OLT device or the ONU device in the foregoing method embodiments is implemented.

An embodiment of this application further provides a PON system. The communication system includes the ONU device and/or the OLT device in the foregoing embodiments. For example, the system includes the ONU device and the OLT device in FIG. 1.

For explanations and beneficial effects of related content in any one of the apparatuses provided above, refer to the corresponding method embodiments provided above. Details are not described herein again.

In several embodiments provided in this application, it should be understood that the disclosed apparatus and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to an optical line terminal OLT device, wherein the method comprises:
receiving, by the OLT device, a first serial number SN from a first optical network unit ONU device in a first time window;
assigning, by the OLT device, a first ONU identifier to the first ONU device;
sending, by the OLT device, first indication information and the first ONU identifier, wherein the first indication information indicates that the OLT device successfully assigns the first ONU identifier to the first ONU device;
receiving, by the OLT device, a second SN from a second ONU device in a second time window, wherein the second SN is the same as the first SN; and
determining, by the OLT device based on an authentication result of the first ONU device, whether to assign a second ONU identifier to the second ONU device.

2. The method according to claim 1, wherein determining, by the OLT device based on the authentication result of the first ONU device, whether to assign the second ONU identifier to the second ONU device comprises: when the OLT device receives the second SN, authentication on the first ONU device is not complete, and
the OLT device does not assign the second ONU identifier to the second ONU device, and/or
the OLT device does not send indication information that indicates a collision.

3. The method according to claim 1, wherein determining, by the OLT device based on the authentication result of the first ONU device, whether to assign the second ONU identifier to the second ONU device comprises: when the OLT device receives the second SN, authentication on the first ONU device is complete, and
the OLT device determines that the authentication on the first ONU device succeeds; and
the OLT device does not assign the second ONU identifier to the second ONU device, and/or
the OLT device does not send indication information that indicates a collision.

4. The method according to claim 1, wherein determining, by the OLT device based on the authentication result of the first ONU device, whether to assign the second ONU identifier to the second ONU device comprises: when the OLT device receives the second SN, authentication on the first ONU device is complete, and
the OLT device determines that the authentication on the first ONU device fails; and
the OLT device assigns the second ONU identifier to the second ONU device, wherein the second ONU identifier is different from the first ONU identifier, and the second ONU identifier is used to enable the first ONU device to return to an initial state; and
the OLT device sends second indication information and the second ONU identifier, wherein the second indication information indicates that the OLT device successfully assigns the second ONU identifier to the second ONU device.

5. The method according to any one of claims 1 to 4, wherein the first indication information and the first ONU identifier are carried in a first assign ONU identifier message.

6. The method according to claim 5, wherein the first assign ONU identifier message further comprises the first SN, and the first SN indicates that the first assign ONU identifier message is used to assign an ONU identifier to a device corresponding to the first SN.

7. The method according to any one of claims 4 to 6, wherein the second indication information and the second ONU identifier are carried in a second assign ONU identifier message.

8. The method according to claim 7, wherein the second assign ONU identifier message further comprises the second SN, and the second SN indicates that the second assign ONU identifier message is used to assign an ONU identifier to a device corresponding to the second SN.

9. The method according to any one of claims 1 to 8, wherein
the OLT device receives, in a third time window, a third SN from a third ONU device and a fourth SN from a fourth ONU device, wherein the third SN is the same as the fourth SN; and
the OLT device sends third indication information, wherein the third indication information indicates a collision.

10. The method according to claim 9, wherein the third indication information is carried in a collision feedback message.

11. The method according to claim 10, wherein the collision feedback message further comprises the third SN.

12. The method according to any one of claims 9 to 11, wherein the third indication information specifically indicates an SN collision.

13. The method according to any one of claims 1 to 12, wherein the method further comprises:
sending, by the OLT device, a first broadcast message and a second broadcast message, wherein the first broadcast message indicates an inactive ONU device to report a serial number in the first time window, the second broadcast message indicates an inactive ONU device to report a serial number in the second time window, and the first time window and the second time window do not overlap.

14. A communication method, applied to a first optical network unit ONU device, wherein the method comprises:
sending, by the first ONU device, a first serial number SN to an optical line terminal OLT device in a first time window, wherein the first SN is the same as a second SN, the second SN is sent by a second ONU device to the OLT device in a second time window, and the second time window is after the first time window;
receiving, by the first ONU device, first indication information and a first ONU identifier from the OLT device, wherein the first indication information indicates that the OLT device successfully assigns the first ONU identifier to the first ONU device; and
in case authentication on the first ONU device fails,
receiving, by the first ONU device, second indication information and a second ONU identifier from the OLT device, wherein the second indication information indicates that the OLT device successfully assigns the second ONU identifier to the second ONU device, and the second ONU identifier is different from the first ONU identifier; and
jumping, by the first ONU device, to an initial state based on the second indication information and the second ONU identifier.

15. The method according to claim 14, wherein the first indication information and the first ONU identifier are carried in a first assign ONU identifier message.

16. The method according to claim 15, wherein the first assign ONU identifier message further comprises the first SN, and the first SN indicates that the first ONU identifier is an identifier corresponding to the first ONU device.

17. The method according to any one of claims 14 to 16, wherein the second indication information and the second ONU identifier are carried in a second assign ONU identifier message.

18. The method according to claim 17, wherein the second assign ONU identifier message further comprises the second SN, and the second SN indicates that the second ONU identifier is an identifier corresponding to the second ONU device.

19. A communication method, applied to a first optical network unit ONU device, wherein the method comprises:
sending, by the first ONU device, a first serial number SN to an optical line terminal OLT device in a first time window, wherein the first SN is the same as a second SN, and the second SN is sent by a second ONU device to the OLT device in the first time window; and
receiving, by the first ONU device, indication information from the OLT device, wherein the indication information indicates a collision.

20. The method according to claim 19, wherein that the indication information indicates the collision comprises: the indication information indicates an SN collision.

21. The method according to claim 19 or 20, wherein the indication information is carried in a collision feedback message.

22. The method according to claim 21, wherein the collision feedback message further comprises an SN, and the SN indicates the SN collision.

23. A communication apparatus, comprising a module configured to perform the method according to any one of claims 1 to 13, a module configured to perform the method according to any one of claims 14 to 18, or a module configured to perform the method according to any one of claims 19 to 22.

24. A chip, wherein the chip comprises a processor and a communication interface; the communication interface is configured to: receive a data frame and transmit the data frame to the processor, or send the data frame to a communication apparatus other than a communication apparatus comprising the chip; and the processor is configured to perform the method according to any one of claims 1 to 13, the method according to any one of claims 14 to 18, or the method according to any one of claims 19 to 22.

25. A computer-readable storage medium, wherein the computer-readable storage medium stores computer instructions; and when the computer instructions are run on a computer, the method according to any one of claims 1 to 13, the method according to any one of claims 14 to 18, or the method according to any one of claims 19 to 22 is performed.

26. A computer program product, wherein the computer program product comprises computer program code; and when the computer program code is run on a computer, the method according to any one of claims 1 to 13, the method according to any one of claims 14 to 18, or the method according to any one of claims 19 to 22 is performed.
